# EUROPÄISCHE PATENTANMELDUNG

(11) **EP 0 819 583 A1**
(43) Veröffentlichungstag der Anmeldung: **21.01.1998**
(21) Anmeldenummer: 97111532.4
(22) Anmeldetag: 08.07.1997
(51) Int. Cl.: B60R 21/20

(54) **Gassack-Modul**

(30) Priorität: 19.07.1996 DE 29612556 U
(71) Anmelder: TRW Occupant Restraint Systems GmbH, 73551 Alfdorf (DE)
(72) Erfinder: Hirt, Dieter, 73572 Heuchlingen (DE); Brucker, Roland, 73529 Schwäbisch Gmünd (DE)
(74) Vertreter: Kitzhofer, Thomas, Dipl.-Ing.

(57) **Zusammenfassung**

Ein Gassack-Modul für ein Fahrzeuglenkrad, mit einem Gassack (29), einem an einer Tragplatte (35) befestigten Gasgenerator (37), einer äußeren Gassack-Abdeckung (3), einer inneren Gassack-Abdeckung (13) und einer Schaltfolie (17) zwischen den beiden Abdeckungen (3, 13) ist dadurch gekennzeichnet, daß die innere Abdeckung (13) einen Behälter für den darin angeordneten, gefalteten Gassack (29) und mit dem Gassack (29) eine vormontierte Einheit bildet. Der Behälter dient auch als Transportbehälter.

## Beschreibung

Die Erfindung betrifft ein Gassack-Modul für ein Fahrzeuglenkrad, mit einem Gassack, einem an einer Tragplatte befestigten Gasgenerator, einer äußeren Gassackabdeckung, einer inneren Gassackabdeckung und einer Schaltfolie zwischen den beiden Abdeckungen.

Ein derartiges, bekanntes Gassack-Modul kann von einem Fahrzeug-Zulieferer komplett vormontiert und bei der Fahrzeugmontage schließlich an der Lenkradnabe fixiert werden. Der zusammengefaltete Gassack und seine Verankerungsplatte, die sich über den Einblasmund in das Innere des Gassacks erstreckt und den Rand des Einblasmundes umgibt, ist mit dem zusammengefalteten Gassack durch eine die beiden Teile umgebende Montagefolie zu einer vormontierten Einheit zusammengefaßt. Zum Zusammenbau des gesamten Gassack-Moduls werden die vormontierte Einheit aus Gassack und Verankerungsplatte, die äußere und innere Abdeckung sowie der Gasgenerator samt der Tragplatte durch Nieten oder Schrauben aneinander befestigt, was aufwendig ist.

Die Erfindung schafft ein Gassack-Modul, das einfacher zusammenbaubar ist, weniger Teile aufweist und bei dem die Gefahr, daß der gefaltete Gassack vor dem Einbau in das Modul während seines Transports beschädigt wird, verringert wird. Dies wird bei einem Gassack-Modul der eingangs genannten Art erfindungsgemäß dadurch erreicht, daß die innere Abdeckung einen Behälter für den darin angeordneten Gassack und mit dem Gassack eine vormontierte Einheit bildet. Beim erfindungsgemäßen Gassack-Modul ist es nicht mehr zwingend erforderlich, eine Montagefolie vorzusehen, denn die innere Abdeckung hat eine Doppelfunktion. Sie dient einerseits zusammen mit der äußeren Abdeckung der Fixierung und der funktionssicheren Betätigung der Schaltfolie und andererseits als Transportbehälter für den gefalteten Gassack. Jeder Gassack nimmt stets dasselbe Volumen im Transportbehälter ein und stützt die innere Abdeckung beim Aufbringen einer äußeren Kraft, z.B. beim Betätigen des Signalhorns, gleichermaßen ab, was die Funktionssicherheit der Schaltfolie erhöht. Beim Zusammenbau des Gassack-Moduls müssen weniger Teile verbaut werden, was die Montagezeit und den Aufwand für die Bereitstellung der notwendigen Teile erniedrigt.

Die innere Abdeckung ist vorzugsweise stirnseitig zum Gasgenerator hin vollständig offen, was das Einbringen des gefalteten Gassacks erleichtert.

Bei der bevorzugten Ausführungsform umfaßt die äußere Abdeckung eine Wandung, die ein hohles Inneres der äußeren Abdeckung seitlich begrenzt, in das die innere Abdeckung eingesetzt ist. Es entsteht somit eine Konstruktion von ineinander schachtelbaren hohlen Körpern, die ein insgesamt stabiles Ganzes ergeben, was insbesondere dann der Fall ist, wenn wenigstens eine Seitenwand der inneren Abdeckung an der Wandung der äußeren Abdeckung anliegt.

Die innere Abdeckung kann durch eine Rast- oder Schnappverbindung an der äußeren Abdeckung arretiert sein. Bei der bevorzugten Ausführungsform ist die Schnappverbindung dadurch gebildet, daß an die Seitenwand der inneren Abdeckung seitlich nach außen vorstehende Fortsätze angeformt sind, die sich durch entsprechende Ausnehmungen in der Wandung der äußeren Abdeckung hindurch erstrecken und die innere Abdeckung an der äußeren verriegeln. Durch das Vorsehen der Schnappverbindung sind die äußere und die innere Abdeckung auf einfache Weise aneinander zu einer größeren Einheit kombinierbar.

Weitere Vorteile und Merkmale der Erfindung ergeben sich aus der folgenden Beschreibung zweier bevorzugter Ausführungsformen und aus den Zeichnungen, auf die Bezug genommen wird. In den Zeichnungen zeigen:
- Fig. 1 eine Schnittansicht des erfindungsgemäßen Gassack-Moduls, die zwei Ausführungsformen zeigt, nämlich eine erste Ausführungsform, die in der linken Hälfte dargestellt ist, und eine zweite Ausführungsform, die in der rechten Hälfte dargestellt ist;
- Fig. 2 eine Seitenansicht der Befestigung der inneren an der äußeren Abdeckung nach der ersten Ausführungsform gemäß Pfeil A in Fig. 1;
- Fig. 3 eine Seitenansicht der Befestigung der inneren an der äußeren Abdeckung nach der zweiten Ausführungsform gemäß Pfeil B in Fig. 1; und
- Fig. 4 eine perspektivische Ansicht einer Hälfte der inneren Abdeckung mit darauf befestigter Schaltfolie.

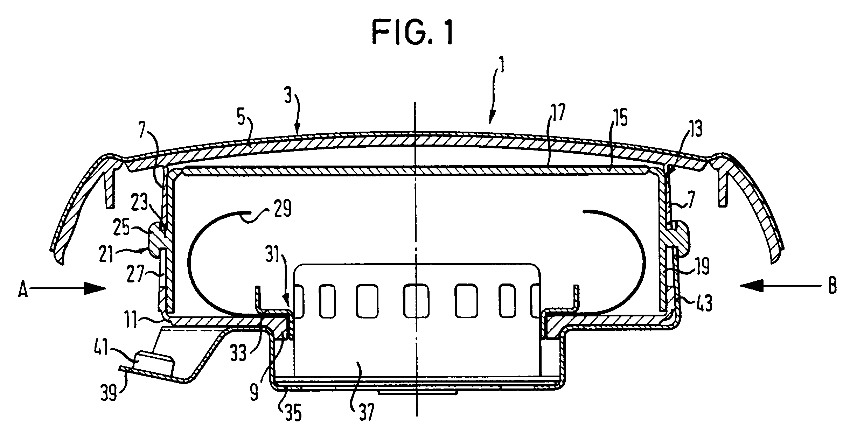

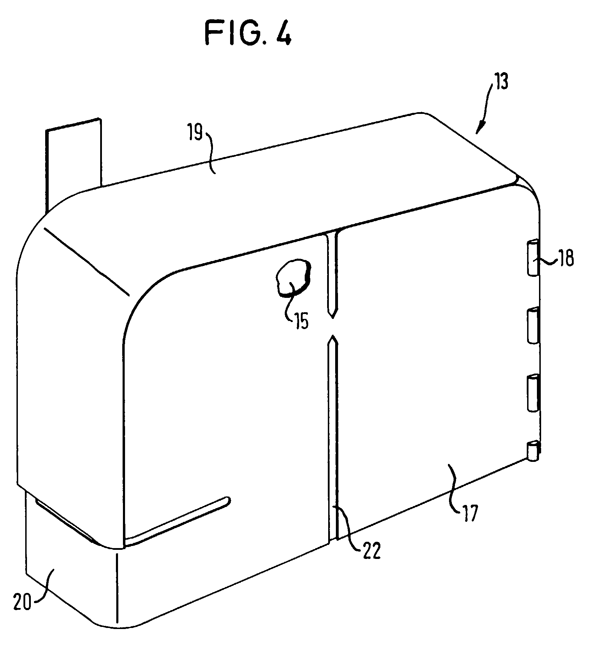

In Fig. 1 ist ein Gassack-Modul 1 in zwei Ausführungsformen gezeigt, wobei im folgenden zuerst die linke Hälfte des (Gassack-Moduls 1 erläutert wird und anschließend die rechte Hälfte, wobei sich die beiden Ausführungsformen großteils nicht voneinander unterscheiden. Das Gassack-Modul 1 umfaßt eine äußere, zweikomponentige Abdeckung 3 mit einer nach außen gewölbten Stirnwand 5, an deren Innenseite eine vorstehende seitliche Wandung 7 angeformt ist. An ihrem unteren Ende geht die Wandung 7 in einzelne Wandungsteile 9 über, die durch Vorsehen jeweils eines Gelenkabschnitts 11 nach innen, in die in Fig. 1 gezeigte Montagestellung schwenkbar sind, in der sie Befestigungsflansche bilden. Die Wandung 7 ist umlaufend und bildet zusammen mit der Stirnwand 5 einen einseitig offenen Hohlkörper. In diesem Hohikörper ist eine innere Abdeckung 13 angeordnet, die eine Stirnwand 15 umfaßt, die der Stirnwand 5 zugewandt ist. Die innere Abdeckung 13 umfaßt ferner eine an die Stirnwand 15 angeformte, umlaufende Seitenwand 19, der Abdeckung 13 zusammen mit der Stirnwand 15 die Form eines offenen Behälters gibt. Die Seitenwand 19 ist der Form der Wandung 7 angepaßt, so daß sie, wie Fig. 1 zu entnehmen ist, an der Innenseite der Wandung 7 anliegt. Auf der Außenseite der Stirnwand 15 ist eine Schaltfolie 17 angebracht, die zur Betätigung des Signalhorns dient. Die Schaltfolie 17 weist zu ihrer Befestigung an einer Seite Ausnehmungen auf, mit der sie (vgl. Fig. 4) in Haken 18 eingehängt wird, welche aus der Stirnwand 15 herausragen. Auf der den Haken 18 gegenüberliegenden Seite erstreckt sich eine an der Schaltfolie 17 vorgesehene Verlängerung 20 über die Seitenwand 19 bis zu einer Befestigung im Inneren der Abdeckung 13, worauf später noch eingegangen wird. Diese Art der Anbringung der Schaltfolie 17 auf gegenüberliegenden Seiten stellt sicher, daß die im Kollisionsfall längs einer Reißlinie 22 gespaltene Schaltfolie 17 nicht gegen den Insassen geschleudert werden. Die Befestigung der Schaltfolie 17 läßt jedoch noch geringe Verlagerungen zu, um Wärmeausdehnungen auszugleichen.

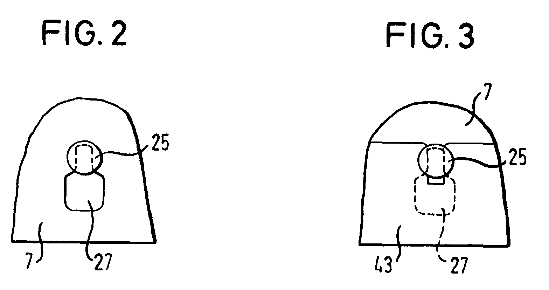

Mehrere auf dem Umfang der Seitenwand 19 verteilt angeordnete, an ihr angeformte Fortsätze 21 haben im Querschnitt eine pilzartige Gestalt und weisen einen dünnen Halsabschnitt 23 und einen verdickten Kopfabschnitt 25 auf. Die Fortsätze 21 erstrecken sich durch schlüssellochförmige Ausnehmungen 27 in der Wandung 7, von denen eine in Fig. 2 näher gezeigt ist. Die Ausnehmung 27 hat einen größeren Abschnitt, durch den der Kopfabschnitt 25 gesteckt wird, und einen schmäleren Abschnitt, in den der Fortsatz 21 in der montierten Stellung geschoben wird und dessen Breite dem Durchmesser des Halsabschnitts 23 in etwa entspricht, so daß ein Durchschieben des Kopfabschnitts 25 nach innen verhindert wird. Die Fortsätze 21 und die zugehörigen Ausnehmungen 27 bilden eine Rastverbindung der äußeren und der inneren Abdeckung 3, 13. Die Fortsätze 21 dienen nicht nur dazu, die innere Abdeckung 13 formschlüssig und klapperfrei an der äußeren Abdeckung 3 zu befestigen, sondern vor allem um zu verhindern, daß beim Aufblasen des Gassacks 29 im Kollisionsfall, der zum Aufreißen der Stirnwände 5 und 15 führt, die innere Abdeckung 13 in Richtung Fahrzeuginsassen geschleudert wird, sondern fest verankert bleibt.

Im Inneren der Abdeckung 13 ist ein gefalteter (Gassack 29 angeordnet, von dem nur der zum Einblasmund 31 führende Abschnitt gezeigt ist. Abdeckung 13 und Gassack 29 bilden eine vormontierte Einheit. Eine Verankerungsplatte 33 erstreckt sich durch den Einblasmund 31 in das Innere des gefalteten Gassacks 29 und umgibt den Rand des Einblasmundes 31. Die in Fig. 4 gezeigte Verlängerung 20 erstreckt sich, was nicht dargestellt ist, bis zwischen dem Rand des Gassacks 29 im Bereich des Einblasmundes 31 und der Verankerungsplatte 33, wo sie geklemmt wird. Ein an einer Tragplatte 35 aus Metall befestigter Gasgenerator 37 ragt durch den Einblasmund 31 teilweise in das Innere des Gassacks 29. An abgebogenen Abschnitten 39 der Tragplatte 35 sind Muttern 41 angebracht, die zur Befestigung des Gassack-Moduls 1 an einer Lenkradnabe durch Schrauben dienen.

Die äußere Abdeckung 3 wird an der Tragplatte 35 durch mehrere (nicht gezeigte) an der Verankerungsplatte 33 angeformte Befestigungsbolzen angeschraubt, die sich durch Öffnungen im Rand des Einblasmundes 31, durch Öffnungen in den klappbaren Wandungsteilen 9 und durch Öffnungen in der Tragplatte 35 hindurch erstrecken. Durch auf die freien Enden der Befestigungsbolzen aufgeschraubte Muttern wird die Verankerungsplatte 33 gegen die Tragplatte 35 gespannt, wodurch die dazwischenliegenden Teile, nämlich der (Gassack 29 und die Wandungsteile 9 eingespannt und damit befestigt werden.

Das gesamte (Gassack-Modul 1 bildet eine komplette, transportierbare Einheit, die nur noch an die Lenkradnabe angeschraubt werden muß. Da die innere Abdeckung 13 und der gefaltete Gassack 29 eine vormontierte Einheit bilden, bei der die Abdeckung 13 einen Behälter für den Gassack 29 darstellt, müssen zum Zusammenbau des (Gassack-Moduls 1 nach dem Anbringen der Schaltfolie 17 nur drei Teile montiert werden, nämlich die äußere Abdeckung 3, die vormontierte Einheit aus innerer Abdeckung 13, Gassack 29 und Verankerungsplatte 33 sowie die weitere vormontierte Einheit aus Gasgenerator 37 mit Tragplatte 35. Der Zusammenbau wird folgendermaßen durchgeführt: Bei nach unten geklappten Wandungsteilen 9 wird die innere Abdeckung 13 in die äußere Abdeckung 3 geschoben, wobei die Seitenwand 19 nach innen elastisch nachgibt, bis die Fortsätze 21 in die Ausnehmungen 27 schnappen. Die innere Abdeckung 13 wird anschließend weiter in die äußere Abdeckung 3 geschoben, bis die Fortsätze 21 die schmäleren Abschnitte der Ausnehmungen 27 erreicht haben, wie dies in Fig. 2 gezeigt ist. Anschließend werden die Wandungsteile 9 nach innen geklappt und die Tragplatte 35 aufgesetzt, woraufhin Muttern auf die nach unten vorstehenden, an der Verankerungsplatte 33 angeformten Befestigungsbolzen aufgeschraubt werden.

Alternativ kann auch eine komplette vormontierte Einheit, bestehend aus der äußeren Abdeckung und der darin angeordneten inneren Abdeckung 13 mit dem (Gassack 29 vorgesehen sein.

Bei der in der rechten Hälfte von Fig. 1 gezeigten Ausführungsform ist an der Tragplatte 35 im Bereich jedes Fortsatzes 21 eine Lasche 43 vorgesehen, die an der Außenseite der Wandung 7 anliegt und dazu dient, das Gassack-Modul 1 seitlich zu stabilisieren. Beim Aufblasen des Gassacks 29 soll nämlich der Druck im Inneren der Abdeckung 13 zum axialen Austreten des Gassacks 29 und nicht zum seitlichen Verformen des Gassack-Moduls 1 führen. Jede Lasche 43 spaltet sich an ihrem freien, oberen Ende gabelförmig auf, wie Fig. 3 zu entnehmen ist, und erfaßt im entstehenden Spalt einen Fortsatz 21 im Bereich des Halsabschnitts 23, so daß die Lasche 43 zusätzlich auch ein Herausziehen des Fortsatzes 21 im Kollisionsfall verhindert.

Die beiden Ausführungsformen des Gassack-Moduls zeigen sich durch eine einfache Montage aus und sind preisgünstig herstellbar.

## Patentansprüche

1. Gassack-Modul für ein Fahrzeuglenkrad, mit einem Gassack (29), einem an einer Tragplatte (35) befestigten Gasgenerator (37), einer äußeren Gassack-Abdeckung (3), einer inneren Gassack-Abdeckung (13) und einer Schaltfolie (17) zwischen den beiden Abdeckungen (3, 13), dadurch gekennzeichnet, daß die innere Abdeckung (13) einen Behälter für den darin angeordneten, gefalteten (Gassack (29) und mit dem Gassack (29) eine vormontierte Einheit bildet.

2. (Gassack-Modul nach Anspruch 1, dadurch gekennzeichnet, daß die innere Abdeckung (13) stirnseitig zum Gasgenerator (27) hin vollständig offen ist.

3. Gassack-Modul nach Anspruch 1 oder 2, dadurch gekennzeichnet, daß die äußere Abdeckung (3) eine Wandung (7) umfaßt, durch die ein hohles Inneres der äußeren Abdeckung (3) seitlich begrenzt wird, in das die innere Abdeckung (13) eingesetzt ist.

4. Gassack-Modul nach Anspruch 3, dadurch gekennzeichnet, daß wenigstens eine Seitenwand (19) der inneren Abdeckung (13) an der Innenseite der Wandung (7) der äußeren Abdeckung (3) anliegt.

5. Gassack-Modul nach einem der vorstehenden Ansprüche, dadurch gekennzeichnet, daß die innere Abdeckung (13) durch eine Rastverbindung an der äußeren Abdeckung (3) arretierbar ist.

6. Gassack-Modul nach den Ansprüchen 3 oder 4 und 5, dadurch gekennzeichnet, daß an die Seitenwand (19) der inneren Abdeckung (13) seitlich nach außen vorstehende Fortsätze (21) angeformt sind, die sich durch entsprechende Ausnehmungen (27) in der Wandung (7) der äußeren Abdeckung (3) hindurch erstrecken.

7. Gassack-Modul nach Anspruch 6, dadurch gekennzeichnet, daß jeder Fortsatz (21) pilzförmig ist und einen dünnen Halsabschnitt (23) sowie einen dicken Kopfabschnitt (25) aufweist, der bei zusammengebautem Gassack-Modul (1) ein Herausziehen jedes Fortsatzes (21) aus der entsprechenden Ausnehmung (27) verhindert.

8. Gassack-Modul nach einem der Ansprüche 1 bis 7, dadurch gekennzeichnet, daß die Tragplatte (35) an der Außenseite der Wandung (7) anliegende, gebogene Laschen (43) zur seitlichen Stabilisierung des Gassack-Moduls (1) beim Aufblasen des Gassacks (29) aufweist.

9. Gassack-Modul nach den Ansprüchen 7 und 8, dadurch gekennzeichnet, daß sich jede Lasche (43) zu ihrem freien, oberen Ende hin gabelförmig aufspaltet und in dem entstehenden Spalt den Halsabschnitt (23) des Fortsatzes (21) aufnimmt, wobei der Spalt schmäler als der Durchmesser des Kopfabschnitts (25) ist, um ein Herausziehen des Fortsatzes (21) aus den Ausnehmungen (27) zusätzlich zu verhindern.

10. Gassack-Modul nach einem der vorstehenden Ansprüche, dadurch gekennzeichnet, daß die Wandung (7) nach innen umklappbare Wandungsteile (9) aufweist, die als Flansch zur Befestigung der äußeren Abdeckung (3) an der Tragplatte (35) dienen.

11. Gassack-Modul nach einem der vorstehenden Ansprüche, dadurch gekennzeichnet, daß die Schaltfolie (17) an der Außenseite der Stirnwand (15) der inneren Abdeckung (13) schwimmend gelagert ist.

12. Gassack-Modul nach einem der vorstehenden Ansprüche, dadurch gekennzeichnet, daß die Schaltfolie (17) an der Außenseite der Stirnwand (15) der inneren Abdeckung (13) beiderseits ihrer Reißlinie (22) befestigt ist und auf wenigstens einer Seite in sich aus der Stirnwand (15) heraus erstreckende Haken (18) eingehängt ist.
